# EUROPEAN PATENT SPECIFICATION

(11) **EP 3 437 392 B1**
(45) Date of publication and mention of the grant of the patent: **02.03.2022**
(21) Application number: 16897445.9
(22) Date of filing: 21.09.2016
(51) Int. Cl.: H04W 60/04, H04W 8/02, H04W 88/02, H04W 88/08, H04W 48/02, H04W 60/06

(54) **TAU ON IMS CALL REQUEST IN RADIO ACCESS NETWORKS**
TAU FÜR IMS-ANRUFANFORDERUNG IN FUNKZUGANGSNETZEN
TAU POUR UNE DEMANDE D'APPEL IMS DANS DES RÉSEAUX D'ACCÈS RADIO

(30) Priority: 28.03.2016 US 201662314271 P
(43) Date of publication of application: 06.02.2019
(73) Proprietor: Apple Inc., Cupertino, CA 95014 (US)
(72) Inventor: MITTY, Harish, Bangalore, KA 560097 (IN); ZAUS, Robert, 80686 München (DE)
(74) Representative: Wardle, Callum Tarn
(86) International application number: PCT/US2016/052921
(87) International publication number: WO 2017/171920

(56) References cited:
- EP-A1- 2 930 985
- WO-A1-2013/167802
- WO-A1-2016/003140
- US-A1- 2013 039 244
- US-A1- 2014 126 361
- US-A1- 2014 153 408
- US-A1- 2014 153 408
- "3rd Generation Partnership Project; Technical Specification Group Core Network and Terminals; Non-Access-Stratum (NAS) protocol for Evolved Packet System (EPS); Stage 3 (Release 12)", 3GPP STANDARD; 3GPP TS 24.301, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. V12.12.0, 18 March 2016 (2016-03-18), pages 1-383, XP051088176, [retrieved on 2016-03-18]
- ZTE ET AL: "MMTEL Service when T3346 running", 3GPP DRAFT; C1-151095_MMTEL_R13, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. CT WG1, no. Bratislava (Slovakia); 20150413 - 20150417 12 April 2015 (2015-04-12), XP050929516, Retrieved from the Internet: URL:http://www.3gpp.org/ftp/Meetings_3GPP_ SYNC/CT1/Docs/ [retrieved on 2015-04-12]

## Description

### TECHNICAL FIELD

The present invention pertains to radio access networks. Some examples relate to Internet Protocol (IP) Multimedia Core Network Subsystem (IMS) calls in cellular and wireless local area network (WLAN) networks, including Third Generation Partnership Project (3GPP) networks such as Global System for Mobile Communication (GSM) and Long Term Evolution (LTE) networks. Some examples relate to IMS call handling in different Evolved Packet System (EPS) Mobility Management (EMM) and General Packet Radio Services (GPRS) Mobility management (GMM) states in one or more of these networks.

### BACKGROUND

A wide variety of radio access networks (RANs) such as a LTE (or LTE-Advanced, 4G or 5G) network, a GSM Enhanced Data rates for GSM Evolution (EDGE) Radio Access Network (GERAN), a Universal Mobile Telecommunications System Terrestrial Radio Access Network (UTRAN), and an Evolved-UTRAN (E-UTRAN) may be available in different geographical areas to provide communication services to user equipment (UEs). Such networks may provide different services through a common core network; for example, the GERAN or UTRAN may provide voice services while the E-UTRAN may provide packet services. Overall use of such 3GPP networks has increased due to both an increase in the types of devices using network resources as well as the type and amount of data and the bandwidth used by these UEs. As a result, the 3GPP standard that governs operation of these networks continues to evolve with new features being added and issues with the existing operations being resolved. In particular, operation of a UE under certain conditions may not be defined and may result in detrimental actions, such as dropped IMS calls or missing data, occurring when such conditions are met. Related background disclosures are US 2014/153408 A1 disclosing RAU/TAU procedure triggered by receiving at an user equipment from an upper layer a request for a IMS voice/video call. 3rd Generation Partnership Project; Technical Specification Group Core Network and Terminals; Non-Access-Stratum (NAS) protocol for Evolved Packet System (EPS); Stage 3 (Release 12)",3GPP STANDARD; 3GPP TS 24.301, XP051088176 discloses MO-MMTEL voice/ video calls. WO 2016/003140 A1 & US 2016/219493 A1 disclose yet another MO-MMTEL arrangement.

### SUMMARY

The present invention relates to an apparatus according to claim 1, a method according to claim 5 and a non-transitory computer-readable storage medium storing instruction according to claim 3 for performing a routing area update upon receiving from an upper layer a multimedia telephony service request.

### BRIEF DESCRIPTION OF THE FIGURES

In the figures, which are not necessarily drawn to scale, like numerals may describe similar components in different views. Like numerals having different letter suffixes may represent different instances of similar components. The figures illustrate generally, by way of example, but not by way of limitation, various embodiments discussed in the present document.
FIG. 1 shows an example of a portion of an end-to-end network architecture of a LTE network in accordance with some embodiments.
FIG. 2 illustrates components of a communication device in accordance with some embodiments.
FIG. 3 illustrates a block diagram of a communication device in accordance with some embodiments.
FIG. 4 illustrates another block diagram of a communication device in accordance with some embodiments.
FIG. 5 is a flowchart of an Attach procedure in accordance with some embodiments.
FIG. 6 is a flowchart of a Tracking Area Update (TAU) procedure in accordance with some embodiments.
FIG. 7 is a flowchart of a Service Request (SR) procedure in accordance with some embodiments.
FIG. 8 illustrates a flow diagram of a modified UE procedure in accordance with some embodiments.

### DETAILED DESCRIPTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments.

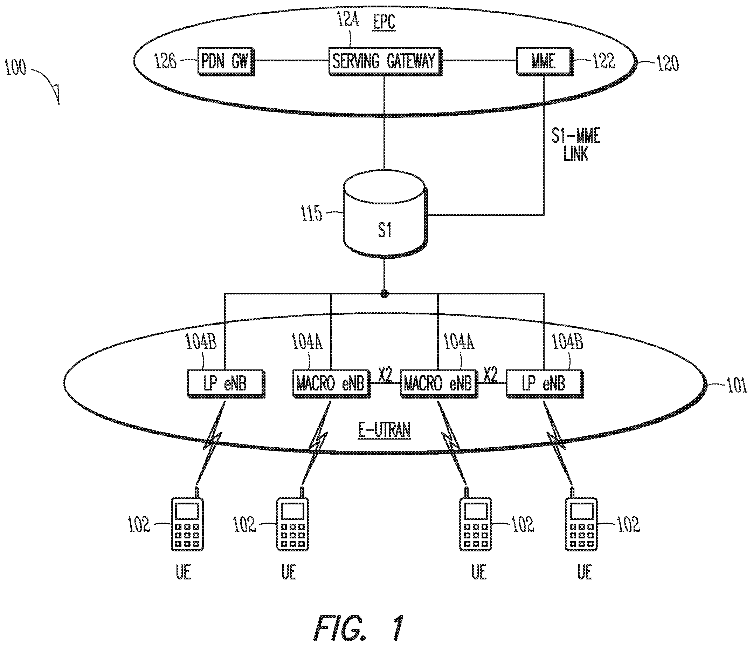

FIG. 1 shows an example of a portion of an end-to-end network architecture of a LTE network. . As used herein, an LTE network refers to both LTE and LTE Advanced (LTE-A) networks as well as other versions of LTE networks to be developed. The network 100 may comprise a radio access network (RAN) (e.g., as depicted, the E-UTRAN or evolved universal terrestrial radio access network) 101 and core network 120 (e.g., shown as an evolved packet core (EPC)) coupled together through an S1 interface 115. For convenience and brevity, only a portion of the core network 120, as well as the RAN 101, is shown in the example.

The core network 120 may include a mobility management entity (MME) 122, serving gateway (serving GW) 124, and packet data network gateway (PDN GW) 126. The RAN 101 may include evolved node Bs (eNBs) 104 (which may operate as base stations) for communicating with user equipment (UE) 102. The eNBs 104 may include macro eNBs 104a and low power (LP) eNBs 104b. Other elements, such as a Home Location Register (HLR)/Home Subscriber Server (LESS), a database including subscriber information of a 3GPP network that may perform configuration storage, identity management and user state storage, and a Policy and Charging Rule Function (PCRF) that performs policy decision for dynamically applying Quality of Service (QoS) and charging policy per service flow, are not shown for convenience.

The MME 122 may be similar in function to the control plane of legacy Serving GPRS Support Nodes (SGSN). The MME 122 may manage mobility aspects in access such as gateway selection and tracking area list management, performing both mobility management (MM) and session management (SM). The Non-Access Stratum (NAS) is a part of the control plane between a UE 102 and the MME 122. The NAS is used for signaling between the UE 102 and the EPC in the LTE/UMTS protocol stack. The NAS supports UE mobility and session management for establishing and maintaining an IP connection between the UE 102 and PDN GW 126.

The serving GW 124 may terminate the user plane interface toward the RAN 101, and route data packets between the RAN 101 and the core network 120. In addition, the serving GW 124 may be a local mobility anchor point for inter-eNB handovers and also may provide an anchor for inter-3GPP mobility. Other responsibilities may include lawful intercept, charging, and policy enforcement, packet routing, idle mode packet buffering, and triggering an MME to page a UE. The serving GW 124 and the MME 122 may be implemented in one physical node or separate physical nodes.

The PDN GW 126 may terminate a SGi interface toward the packet data network (PDN). The PDN GW 126 may route data packets between the EPC 120 and the external PDN, and may perform policy enforcement and charging data collection UE IP address assignment, packet screening and filtering. The PDN GW 126 may also provide an anchor point for mobility devices with a non-LTE access. The external PDN can be any kind of IP network, as well as an IP Multimedia Subsystem (IMS) domain. The PDN GW 126 and the serving GW 124 may be implemented in a single physical node or separate physical nodes.

The eNBs 104 (macro and micro) may terminate the air interface protocol and may be the first point of contact for a UE 102. An eNB 104 may fulfill various logical functions for the RAN 101 including, but not limited to, RNC (radio network controller functions) such as radio bearer management, uplink and downlink dynamic radio resource management and data packet scheduling, and mobility management, UEs 102 may be configured to communicate orthogonal frequency division multiplexed (OFDM) communication signals with an eNB 104 over a multicarrier communication channel in accordance with an OFDMA communication technique. The OFDM signals may comprise a plurality of orthogonal subcarriers.

The S1 interface 115 may be the interface that separates the RAN 101 and the EPC 120. It may be split into two parts: the S1-U, which may carry traffic data between the eNBs 104 and the serving GW 124, and the S1-MME, which may be a signaling interface between the eNBs 104 and the MME 122. The X2 interface may be the interface between eNBs 104. The X2 interface may comprise two parts, the X2-C and X2-U. The X2-C may be the control plane interface between the eNBs 104, while the X2-U may be the user plane interface between the eNBs 104.

With cellular networks, LP cells 104b may be typically used to extend coverage to indoor areas where outdoor signals do not reach well, or to add network capacity in areas with dense usage. In particular, it may be desirable to enhance the coverage of a wireless communication system using cells of different sizes, macrocells, microcells, picocells, and femtocells, to boost system performance. The cells of different sizes may operate on the same frequency band, or may operate on different frequency bands with each cell operating in a different frequency band or only cells of different sizes operating on different frequency bands. As used herein, the term LP eNB refers to any suitable relatively LP eNB for implementing a smaller cell (smaller than a macro cell) such as a femtocell, a picocell, or a microcell. Femtocell eNBs may be typically provided by a mobile network operator to its residential or enterprise customers. A femtocell may be typically the size of a residential gateway or smaller and generally connect to a broadband line. The femtocell may connect to the mobile operator's mobile network and provide extra coverage in a range of typically 30 to 50 meters. Thus, a LP eNB 104b might be a femtocell eNB. When the LP eNB 104b is a Home eNB (HeNB), a HeNB Gateway may be provided between the HeNB and the MME/Service Gateway. This HeNB Gateway may control multiple HeNBs and provide user data and signal traffic from the HeNBs towards the MME/Service Gateway. Similarly, a picocell may be a wireless communication system typically covering a small area, such as in-building (offices, shopping malls, train stations, etc.), or more recently in-aircraft. A picocell eNB may generally connect through the X2 link to another eNB such as a macro eNB through its base station controller (BSC) functionality and/or connect via an S1 interface to an MME/Service Gateway. Thus, LP eNB may be implemented with a picocell eNB since it may be coupled to a macro eNB 104a via an X2 interface. Picocell eNBs or other LP eNBs LP eNB 104b may incorporate some or all functionality of a macro eNB LP eNB 104a. In some cases, this may be referred to as an access point base station or enterprise femtocell.

In general, the UE 102 may communicate with various types of systems, including a UTRAN and GERAN cell, which may provide voice services only or voice services and low data rate packet services, and an E-UTRAN cell, which may provide packet services only or packet services and voice/video services over packet transport. The UTRAN and GERAN cells may be coupled with a Serving General Packet Radio Subsystem Support Node (SGSN) and mobile switching center (MSC) server. The E-UTRAN may be coupled with the MME 122, which in turn may be coupled with the SGSN and the MSC server. The GERAN and UTRAN RANs may be connected to a circuit-switched (CS) domain of the network 100. For circumstances in which UE 102 is communicating via the E-UTRAN cell when setup of a CS voice call is desired, the mobile network may include a CS fallback (CSFB). In CSFB, the UE 102 in the E-UTRAN cell may engage in a CS call - either by setting up a call or responding to a paging message for a CS call. The network 100 may the redirect the UE 102 to a GERAN or UTRAN cell, such as via a packet-switched (PS) handover, via a "release with redirection" procedure, or via a network-assisted cell change over (CCO). In such examples, the UE 102 can set up the mobile originating call or receive the mobile terminating call via the MSC server. Once the CS call is released in GERAN and/or UTRAN cells, the UE 102 may return to the E-UTRAN cell either on its own (e.g., via cell reselection) or with the help of the GERAN and/or UTRAN (e.g., if, during the release of the radio connection for the CS call the GERAN and/or UTRAN cells commands the UE 102 to immediately select a specific E-UTRAN cell).

In operation, for example during the CS call, if the UE 102 is in a GERAN cell and either does not support the simultaneous use of CS services and packet services, the network 100 may suspend packet services for the UE 102. Downlink packets may not be delivered to the UE 102 but may be forwarded by the PDN GW 126 towards the UE 102. In an example, the UE 102 and/or one of the core network nodes (e.g., the MME and/or the SGSN, as appropriate) may inform the serving GW 124 and/or the PDN GW 126 that the gateways should no longer forward downlink user packets from the UE 102. The MME 122 or SGSN may also deactivate dedicated packet bearers which are used for real-time services. The CS call may be released or during the CS call the UE 102 may be handed over to a cell where CS services and packet services can be used simultaneously. Packet services may then be resumed.

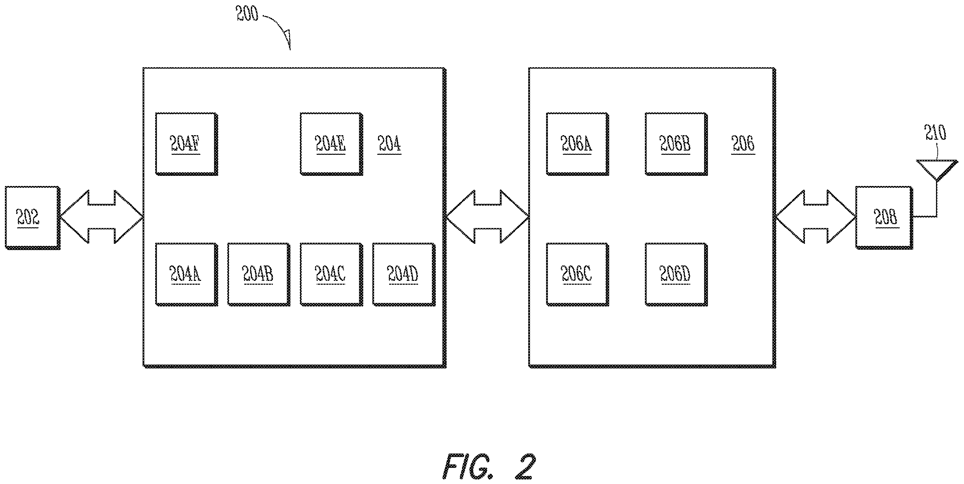

FIG. 2 illustrates components of a communication. The communication device 200 may be a UE, eNB or other network component as described herein. The communication device 200 may be a stationary, non-mobile device or may be a mobile device. The UE 200 may include application circuitry 202, baseband circuitry 204, Radio Frequency (RF) circuitry 206, front-end module (FEM) circuitry 208 and one or more antennas 210, coupled together at least as shown. At least some of the baseband circuitry 204, RF circuitry 206, and FEM circuitry 208 may form a transceiver. Other r network elements, such as the MME may contain some or all of the components shown in FIG. 2.

The application or processing circuitry 202 may include one or more application processors. For example, the application circuitry 202 may include circuitry such as, but not limited to, one or more single-core or multi-core processors. The processor(s) may include any combination of general-purpose processors and dedicated processors (e.g., graphics processors, application processors, etc.). The processors may be coupled with and/or may include memory/storage and may be configured to execute instructions stored in the memory/storage to enable various applications and/or operating systems to run on the system.

The baseband circuitry 204 may include circuitry such as, but not limited to, one or more single-core or multi-core processors. The baseband circuitry 204 may include one or more baseband processors and/or control logic to process baseband signals received from a receive signal path of the RF circuitry 206 and to generate baseband signals for a transmit signal path of the RF circuitry 206. Baseband processing circuity 204 may interface with the application circuitry 202 for generation and processing of the baseband signals and for controlling operations of the RF circuitry 206. For example, in some examples , the baseband circuitry 204 may include a second generation (2G) baseband processor 204a, third generation (3G) baseband processor 204b, fourth generation (4G) baseband processor 204c, and/or other baseband processor(s) 204d for other existing generations, generations in development or to be developed in the future (e.g., fifth generation (5G), 5G, etc.). The baseband circuitry 204 (e.g., one or more of baseband processors 204a-d) may handle various radio control functions that enable communication with one or more radio networks via the RF circuitry 206. The radio control functions may include, but are not limited to, signal modulation/demodulation, encoding/decoding, radio frequency shifting, etc. In some examples , modulation/demodulation circuitry of the baseband circuitry 204 may include FFT, precoding, and/or constellation mapping/demapping functionality. In some examples , encoding/decoding circuitry of the baseband circuitry 204 may include convolution, tail-biting convolution, turbo, Viterbi, and/or Low Density Parity Check (LDPC) encoder/decoder functionality. Examples of modulation/demodulation and encoder/decoder functionality are not limited to these examples and may include other suitable functionality.

In some examples , the baseband circuitry 204 may include elements of a protocol stack such as, for example, elements of an Evolved UTRON (EUTRAN) protocol including, for example, physical (PHY), media access control (MAC), radio link control (RLC), packet data convergence protocol (PDCP), radio resource control (RRC) elements, and/or Non-Access Stratum (NAS) elements. A central processing unit (CPU) 204e of the baseband circuitry 204 may be configured to run elements of the protocol stack for signaling of the PHY, MAC, RLC, PDCP and/or RRC layers, and/or NAS. In some examples , the baseband circuitry may include one or more audio digital signal processor(s) (DSP) 204f. The audio DSP(s) 204f may be include elements for compression/decompression and echo cancellation and may include other suitable processing elements in other embodiments. Components of the baseband circuitry may be suitably combined in a single chip, a single chipset, or disposed on a same circuit board. Some or all of the constituent components of the baseband circuitry 204 and the application circuitry 202 may be implemented together such as, for example, on a system on a chip (SOC).

The baseband circuitry 204 may provide for communication compatible with one or more radio technologies. For example, the baseband circuitry 204 may support communication with an EUTRAN and/or other wireless metropolitan area networks (WMAN), a wireless local area network (WLAN), a wireless personal area network (WPAN). Examples in which the baseband circuitry 204 is configured to support radio communications of more than one wireless protocol may be referred to as multi-mode baseband circuitry. The device can be configured to operate in accordance with communication standards or other protocols or standards, including Institute of Electrical and Electronic Engineers (IEEE) 802.16 wireless technology (WiMax), IEEE 802.11 wireless technology (WiFi) including IEEE 802.11 ad, which operates in the 60 GHz millimeter wave spectrum, various other wireless technologies such as global system for mobile communications (GSM), enhanced data rates for GSM evolution (EDGE), GSM EDGE radio access network (GERAN), universal mobile telecommunications system (UMTS), UMTS terrestrial radio access network (UTRAN), or other 2G, 3G, 4G, 5G, etc. technologies either already developed or to be developed.

RF circuitry 206 may enable communication with wireless networks using modulated electromagnetic radiation through a non-solid medium. The RF circuitry 206 may include switches, filters, amplifiers, etc. to facilitate the communication with the wireless network. RF circuitry 206 may include a receive signal path which may include circuitry to down-convert RF signals received from the FEM circuitry 208 and provide baseband signals to the baseband circuitry 204. RF circuitry 206 may also include a transmit signal path which may include circuitry to up-convert baseband signals provided by the baseband circuitry 204 and provide RF output signals to the FEM circuitry 208 for transmission.

The RF circuitry 206 may include a receive signal path and a transmit signal path. The receive signal path of the RF circuitry 206 may include mixer circuitry 206a, amplifier circuitry 206b and filter circuitry 206c. The transmit signal path of the RF circuitry 206 may include filter circuitry 206c and mixer circuitry 206a. RF circuitry 206 may also include synthesizer circuitry 206d for synthesizing a frequency for use by the mixer circuitry 206a of the receive signal path and the transmit signal path. The mixer circuitry 206a of the receive signal path may be configured to down-convert RF signals received from the FEM circuitry 208 based on the synthesized frequency provided by synthesizer circuitry 206d. The amplifier circuitry 206b may be configured to amplify the down-converted signals and the filter circuitry 206c may be a low-pass filter (LPF) or band-pass filter (BPF) configured to remove unwanted signals from the down-converted signals to generate output baseband signals. Output baseband signals may be provided to the baseband circuitry 204 for further processing. The output baseband signals may be zero-frequency baseband signals, although this is not a requirement. Mixer circuitry 206a of the receive signal path may comprise passive mixers.

The mixer circuitry 206a of the transmit signal path may be configured to up-convert input baseband signals based on the synthesized frequency provided by the synthesizer circuitry 206d to generate RF output signals for the FEM circuitry 208. The baseband signals may be provided by the baseband circuitry 204 and may be filtered by filter circuitry 206c. The filter circuitry 206c may include a low-pass filter (LPF), although the scope of the embodiments is not limited in this respect.

The mixer circuitry 206a of the receive signal path and the mixer circuitry 206a of the transmit signal path may include two or more mixers and may be arranged for quadrature downconversion and/or upconversion respectively. The mixer circuitry 206a of the receive signal path and the mixer circuitry 206a of the transmit signal path may include two or more mixers and may be arranged for image rejection (e.g., Hartley image rejection). The mixer circuitry 206a of the receive signal path and the mixer circuitry 206a may be arranged for direct downconversion and/or direct upconversion, respectively. The mixer circuitry 206a of the receive signal path and the mixer circuitry 206a of the transmit signal path may be configured for super-heterodyne operation.

The output baseband signals and the input baseband signals may be analog baseband signals, although the scope of the embodiments is not limited in this respect. Alternatively, , the output baseband signals and the input baseband signals may be digital baseband signals. The RF circuitry 206 may include analog-to-digital converter (ADC) and digital-to-analog converter (DAC) circuitry and the baseband circuitry 204 may include a digital baseband interface to communicate with the RF circuitry 206.

In some dual-mode examples, a separate radio IC circuitry may be provided for processing signals for each spectrum.

The synthesizer circuitry 206d may be a fractional-N synthesizer or a fractional N/N+1 synthesizer, although other types of frequency synthesizers may be suitable. For example, synthesizer circuitry 206d may be a delta-sigma synthesizer, a frequency multiplier, or a synthesizer comprising a phase-locked loop with a frequency divider.

The synthesizer circuitry 206d may be configured to synthesize an output frequency for use by the mixer circuitry 206a of the RF circuitry 206 based on a frequency input and a divider control input. The synthesizer circuitry 206d may be a fractional N/N+1 synthesizer.

Frequency input may be provided by a voltage controlled oscillator (VCO), although that is not a requirement. Divider control input may be provided by either the baseband circuitry 204 or the applications processor 202 depending on the desired output frequency. A divider control input (e.g., N) may be determined from a look-up table based on a channel indicated by the applications processor 202.

Synthesizer circuitry 206d of the RF circuitry 206 may include a divider, a delay-locked loop (DLL), a multiplexer and a phase accumulator. The divider may be a dual modulus divider (DMD) and the phase accumulator may be a digital phase accumulator (DPA). The DMD may be configured to divide the input signal by either N or N+1 (e.g., based on a carry out) to provide a fractional division ratio. In some example, the DLL may include a set of cascaded, tunable, delay elements, a phase detector, a charge pump and a D-type flip-flop. In these example , the delay elements may be configured to break a VCO period up into Nd equal packets of phase, where Nd is the number of delay elements in the delay line. In this way, the DLL provides negative feedback to help ensure that the total delay through the delay line is one VCO cycle.

Synthesizer circuitry 206d may be configured to generate a carrier frequency as the output frequency, while in other examples , the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. The output frequency may be a LO frequency (f_{LO}). The RF circuitry 206 may include an IQ/polar converter.

FEM circuitry 208 may include a receive signal path which may include circuitry configured to operate on RF signals received from one or more antennas 210, amplify the received signals and provide the amplified versions of the received signals to the RF circuitry 206 for further processing. FEM circuitry 208 may also include a transmit signal path which may include circuitry configured to amplify signals for transmission provided by the RF circuitry 206 for transmission by one or more of the one or more antennas 210.

The FEM circuitry 208 may include a TX/RX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 206). The transmit signal path of the FEM circuitry 208 may include a power amplifier (PA) to amplify input RF signals (e.g., provided by RF circuitry 206), and one or more filters to generate RF signals for subsequent transmission (e.g., by one or more of the one or more antennas 210.

The communication device 200 may include additional elements such as, for example, memory/storage, display, camera, sensor, and/or input/output (I/O) interface as described in more detail below. The communication device 200 described herein may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), or other device that may receive and/or transmit information wirelessly. The communication device 200 may include one or more user interfaces designed to enable user interaction with the system and/or peripheral component interfaces designed to enable peripheral component interaction with the system. For example, the communication device 200 may include one or more of a keyboard, a keypad, a touchpad, a display, a sensor, a non-volatile memory port, a universal serial bus (USB) port, an audio jack, a power supply interface, one or more antennas, a graphics processor, an application processor, a speaker, a microphone, and other I/O components. The display may be an LCD or LED screen including a touch screen. The sensor may include a gyro sensor, an accelerometer, a proximity sensor, an ambient light sensor, and a positioning unit. The positioning unit may communicate with components of a positioning network, e.g., a global positioning system (GPS) satellite.

The antennas 210 may comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) examples , the antennas 210 may be effectively separated to take advantage of spatial diversity and the different channel characteristics that may result.

Although the communication device 200 is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. The functional elements may refer to one or more processes operating on one or more processing elements.

Embodiments may be implemented in one or a combination of hardware, firmware and software. Embodiments may also be implemented as instructions stored on a computer-readable storage device, which may be read and executed by at least one processor to perform the operations described herein. A computer-readable storage device may include any non-transitory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. Some embodiments may include one or more processors and may be configured with instructions stored on a computer-readable storage device.

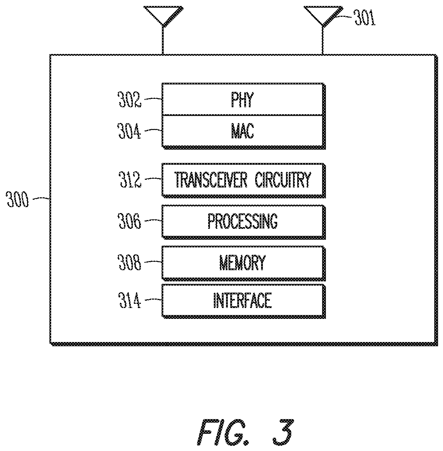

FIG. 3 is a block diagram of a communication device . The device may be a UE, for example, such as the UE shown in FIG. 1. The physical layer circuitry 302 may perform various encoding and decoding functions that may include formation of baseband signals for transmission and decoding of received signals. The communication device 300 may also include medium access control layer (MAC) circuitry 304 for controlling access to the wireless medium. The communication device 300 may also include processing circuitry 306, such as one or more single-core or multi-core processors, and memory 308 arranged to perform the operations described herein. The physical layer circuitry 302, MAC circuitry 304 and processing circuitry 306 may handle various radio control functions that enable communication with one or more radio networks compatible with one or more radio technologies. The radio control functions may include signal modulation, encoding, decoding, radio frequency shifting, etc. For example, similar to the device shown in FIG. 2, communication may be enabled with one or more of a WMAN, a WLAN, and a WPAN. The communication device 300 can be configured to operate in accordance with 3GPP standards or other protocols or standards, including WiMax, WiFi, WiGig, GSM, EDGE, GERAN, UMTS, UTRAN, or other 3G, 3G, 4G, 5G, etc. technologies either already developed or to be developed. The communication device 300 may include transceiver circuitry 312 to enable communication with other external devices wirelessly and interfaces 314 to enable wired communication with other external devices. As another example, the transceiver circuitry 312 may perform various transmission and reception functions such as conversion of signals between a baseband range and a Radio Frequency (RF) range.

The antennas 301 may comprise one or more directional or omnidirectional antennas, including, for example, dipole antennas, monopole antennas, patch antennas, loop antennas, microstrip antennas or other types of antennas suitable for transmission of RF signals. In some MIMO examples , the antennas 301 may be effectively separated to take advantage of spatial diversity and the different channel characteristics that may result.

Although the communication device 300 is illustrated as having several separate functional elements, one or more of the functional elements may be combined and may be implemented by combinations of software-configured elements, such as processing elements including DSPs, and/or other hardware elements. For example, some elements may comprise one or more microprocessors, DSPs, FPGAs, ASICs, RFICs and combinations of various hardware and logic circuitry for performing at least the functions described herein. The functional elements may refer to one or more processes operating on one or more processing elements. Embodiments may be implemented in one or a combination of hardware, firmware and software. Embodiments may also be implemented as instructions stored on a computer-readable storage device, which may be read and executed by at least one processor to perform the operations described herein.

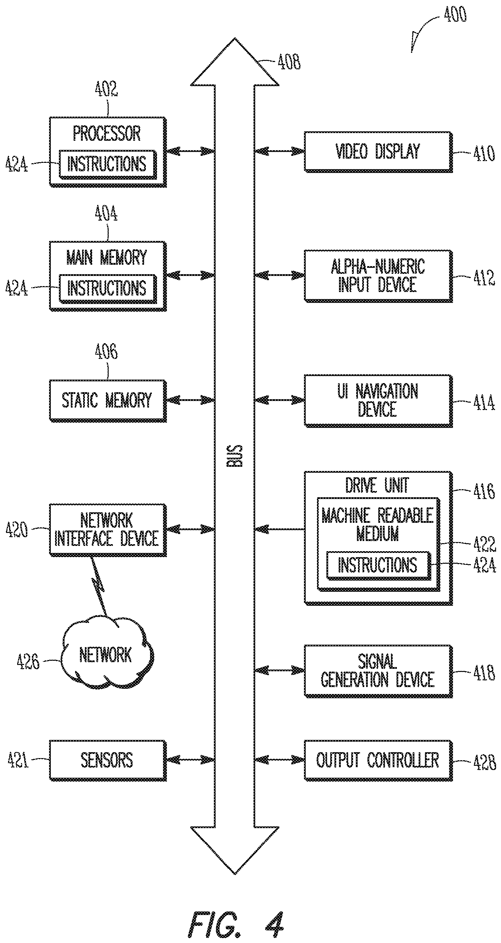

FIG. 4 illustrates another block diagram of a communication device Alternatively , the communication device 400 may operate as a standalone device or may be connected (e.g., networked) to other communication devices. In a networked deployment, the communication device 400 may operate in the capacity of a server communication device, a client communication device, or both in server-client network environments. In an example, the communication device 400 may act as a peer communication device in peer-to-peer (P2P) (or other distributed) network environment. The communication device 400 may be a UE, eNB, PC, a tablet PC, a STB, a PDA, a mobile telephone, a smart phone, a web appliance, a network router, switch or bridge, or any communication device capable of executing instructions (sequential or otherwise) that specify actions to be taken by that communication device. Further, while only a single communication device is illustrated, the term "communication device" shall also be taken to include any collection of communication devices that individually or jointly execute a set (or multiple sets) of instructions to perform any one or more of the methodologies discussed herein, such as cloud computing, software as a service (SaaS), other computer cluster configurations.

Examples, as described herein, may include, or may operate on, logic or a number of components, modules, or mechanisms. Modules are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside on a communication device readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor may be configured as respective different modules at different times. Software may accordingly configure a hardware processor, for example, to constitute a particular module at one instance of time and to constitute a different module at a different instance of time.

Communication device (e.g., computer system) 400 may include a hardware processor 402 (e.g., a central processing unit (CPU), a graphics processing unit (GPU), a hardware processor core, or any combination thereof), a main memory 404 and a static memory 406, some or all of which may communicate with each other via an interlink (e.g., bus) 408. The communication device 400 may further include a display unit 410, an alphanumeric input device 412 (e.g., a keyboard), and a user interface (UI) navigation device 414 (e.g., a mouse). In an example, the display unit 410, input device 412 and UI navigation device 414 may be a touch screen display. The communication device 400 may additionally include a storage device (e.g., drive unit) 416, a signal generation device 418 (e.g., a speaker), a network interface device 420, and one or more sensors 421, such as a global positioning system (GPS) sensor, compass, accelerometer, or other sensor. The communication device 400 may include an output controller 428, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The storage device 416 may include a communication device readable medium 422 on which is stored one or more sets of data structures or instructions 424 (e.g., software) embodying or utilized by any one or more of the techniques or functions described herein. The instructions 424 may also reside, completely or at least partially, within the main memory 404, within static memory 406, or within the hardware processor 402 during execution thereof by the communication device 400. In an example, one or any combination of the hardware processor 402, the main memory 404, the static memory 406, or the storage device 416 may constitute communication device readable media.

While the communication device readable medium 422 is illustrated as a single medium, the term "communication device readable medium" may include a single medium or multiple media (e.g., a centralized or distributed database, and/or associated caches and servers) configured to store the one or more instructions 424.

The term "communication device readable medium" may include any medium that is capable of storing, encoding, or carrying instructions for execution by the communication device 400 and that cause the communication device 400 to perform any one or more of the techniques of the present disclosure, or that is capable of storing, encoding or carrying data structures used by or associated with such instructions. Non-limiting communication device readable medium examples may include solid-state memories, and optical and magnetic media. Specific examples of communication device readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); and CD-ROM and DVD-ROM disks. In some examples, communication device readable media may include non-transitory communication device readable media. In some examples, communication device readable media may include communication device readable media that is not a transitory propagating signal.

The instructions 424 may further be transmitted or received over a communications network 426 using a transmission medium via the network interface device 420 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., IEEE 802.11 family of standards known as WiFi^{®}, IEEE 802.16 family of standards known as WiMax^{®}), IEEE 802.15.4 family of standards, a LTE family of standards, a UMTS family of standards, peer-to-peer (P2P) networks, among others. In an example, the network interface device 420 may include one or more physical jacks (e.g., Ethernet, coaxial, or phone jacks) or one or more antennas to connect to the communications network 426. In an example, the network interface device 420 may include a plurality of antennas to wirelessly communicate using at least one of single-input multiple-output (SIMO), MIMO, or multiple-input single-output (MISO) techniques. In some examples, the network interface device 420 may wirelessly communicate using Multiple User MIMO techniques. The term "transmission medium" shall be taken to include any intangible medium that is capable of storing, encoding or carrying instructions for execution by the communication device 400, and includes digital or analog communications signals or other intangible medium to facilitate communication of such software.

In operation, a UE, such as that shown in any of FIGS. 1-4 may attempt to attach to the network and use network services by exchanging control signaling messages with the network using NAS signaling between the UE and the MME. The EPS Mobility Management (EMM) and EPS Session Management (ESM) functions may have a number of EMM states. EMM connection management may be performed through EPS Connection Management (ECM) function, and an ECM connection may use Radio Resource Control (RRC) connection messaging over the radio interface and an S1 signaling connection over the S1-MME interface.

The UE may initially attempt to attach to an LTE network using an Attach Request. After attachment, the MME may authenticate and register the UE and establish an EPS session and one or more bearers (e.g., dedicated or non-dedicated) for using network services such as Voice-over-LTE (VoLTE) calls. In addition, mobility management functionality for supporting UE mobility may be initiated. Mobility and session management between a UE and the MME are controlled using Non-Access Stratum (NAS) messages in accordance with the NAS protocols in the NAS located in the control plane of UE and MME. The NAS protocols are defined in 3GPP TS 24.301.

There may be three types of EMM procedures. These may include an EMM common procedure, an EMM specific procedure and an EMM connection management procedure. The EMM common procedure, which include globally unique temporary identifier (GUTI) allocation, authentication, identification, security mode control (SMC), and EMM information, can always be initiated when a NAS signaling connection exists between the UE and MME. The EMM specific procedure may be related to user mobility (registration and location update). These procedures may include attach, detach and tracking area update (TAU), and, depending on the network, possibly combined attach, combined detach and combined TAU. The EMM connection management procedure, which may include service request, paging and transport of NAS messages, may be related to establishing a NAS signaling connection.

The EMM, which is a sublayer of the NAS, may take one of a number of states that depend on the device: seven EMM states for the UE and four EMM states for the MME. For a UE and an MME to be able to exchange NAS messages, a signaling connection (the ECM connection) for exchanging NAS messages must be established between the UE and the MME. The ECM connection may include an RRC connection between the UE and the eNB, and a S1 signaling connection between the eNB and the MME. The EMM states may include an EMM-Deregistered state in which the UE is not attached to the LTE network and the MME does not know the current location of the UE, but may have the last TAU information reported by the UE. In an EMM-Registered state, the UE is attached to the LTE network, an IP address assigned to the UE and one or more EPS bearers established for the UE. The MME may know the current location of the UE either at the cell level or tracking area level. In the ECM-Idle state, an ECM connection between the UE and the MME has not yet been established for the UE, while in the ECM-Connected state the ECM connection is established. In the RRC-Idle state, an RRC connection has not yet been established between the UE and the eNB, while in the RRC-Connected state the RRC connection is established.

The UE may be in the EMM-Deregistered state, the ECM-Idle state and the RRC-Idle state when the UE is initially powered on or after the UE is powered off. Depending on the amount of time the UE is powered off or in this combination of states, the LTE network may retain some of the UE context, specifically the Globally Unique Temporary Identifier (GUTI) and NAS Security Context, to speed up the next attach procedure undertaken by the UE.

While in the EMM-Deregistered state, the UE may select a PLMN and cell with which to communicate. The UE may request permission to attach to the network to use services via an initial attach procedure and transitions to an EMM-Registered state after completion of the attach procedure. During the attach (or combined attach) procedure, the UE may enter a EMM-Registered-Initiated state while the UE is waiting for a response from the MME.

Other substates of the EMM-Deregistered state include, for example, EMM-Deregistered.Normal-Service, chosen when a suitable cell has been found and the PLMN or tracking area is not in the forbidden list, and EMM-Deregistered.Limited-Service, chosen when the selected cell is unable to provide normal service (e.g. the selected cell is in a forbidden PLMN, is in a forbidden tracking area or the selected cell is a CSG cell whose CSG ID and associated PLMN identity are not included in the UE's Allowed CSG list or in the UE's Operator CSG List). Of particular relevance as discussed below is EMM-Deregistered.Attempting-to-Attach state, which the UE may enter if the attach or combined attach procedure fails due to a missing response from the network or due to problems with the EPS bearer setup or ESM procedure failure, for example.

In the EMM-Registered/ECM-Connected/RRC-Connected state, the UE is attached to the MME can use network services. In this state combination, a handover procedure is used for UE mobility such that handover from a serving cell to a neighbor cell may occur based on signal quality measurements. Radio and network resources are assigned to signaling connections in the control plane and EPS bearers in user plane. In the EMM-Registered/ECM-Idle/RRC-Idle state, the UE may request services (such as VoLTE) by transmitting a service request, entering the EMM-Service-Request-Initiated state and waiting for a response from the MME. Similarly, in the EMM-Registered state, the UE may transmit a TAU request for one of several reasons provided below, entering the EMM-Tracking-Area-Updating-Initiated state and waiting for a response from the MME. Whether the service or TAU request is accepted, fails or is rejected, the UE may return to the EMM-Registered state above. In some cases, a rejection of the TAU request may return the UE to the EMM-Deregistered state.

The UE may be requested by the network to transition to the EMM-Registered state/ECM-Idle state/RRC-Idle state, after not using any network services (no UL or DL traffic) for a predetermined amount of time As the ECM and RRC connection is released, no UL/DL user traffic can be delivered until an ECM connection is re-established. In this state combination, a cell reselection procedure is used for UE mobility, i.e., the UE selects a cell dependent on cell reselection criteria. The transition back to the connected state may occur when there is new UL or DL traffic, and the UE (which is in the idle state) initiates a service request procedure, or when the UE initiates a TAU procedure as its tracking area has changed or a periodic TAU timer has expired.

Other substates of the EMM-Registered state include, for example, EMM-Registered.Normal-Service, chosen as the primary substate when the UE enters the EMM-Registered state, and EMM-Registered.Limited-Service, chosen if the cell the UE selected is known not to be able to provide normal service. Of particular relevance as discussed below is the EMM-Registered.Attempting-to-Update state. The UE may enter the EMM-Registered.Attempting-to-Update state if the TAU or combined TAU procedure fails for one of the reasons explored in more detail below.

While in the EMM-Registered state, the UE may detach from the network, transitioning into the EMM-Deregistered state if the UE is turned off or when the attach request or TAU request is rejected (TAU Reject). During the detach procedure, the UE may enter a EMM-Deregistered-Initiated state after the UE has requested release of the EMM context by starting the detach (or combined detach procedure) and is waiting for a response from the MME.

Once a UE successfully attaches to a network and is in the EMM-Registered state, the UE may use services provided through EPS bearers. An EPS bearer active when the UE is in the ECM-Connected and RRC-Connected state includes a Data Radio Bearer (DRB) between the UE and the eNB, an S1 bearer between the eNB and the SGW and an S5 bearer between the SGW and the PDN GW. When the UE is in the ECM-Idle and RRC-Idle state, in which no UL or DL traffic is present, only the S5 bearer is established and stays activated, the other bearers are deactivated. The ECM connection (the RRC connection between the UE and the eNB and the S1 signaling connection between the eNB and the MME) is established when user traffic is to be delivered or when the UE needs to send NAS signaling, e.g., for a TAU procedure or detach procedure.

A UE in the EMM-Registered state, whether in the ECM-Idle/RRC-Idle or the ECM-Connected/RRC-Connected state, may update the tracking area whenever the tracking area changes. However, while in ECM-Idle/RRC-Idle state, the UE may update the tracking area on a regular basis every time a timer ("periodic TAU timer") expires, even when the tracking area is unchanged. The TAU may be initiated by a TAU Request message sent by the UE. When the UE is in the idle (ECM-Idle/RRC-Idle) state, the ECM/RRC connection may first be established, and UE may transition to the ECM-Connected/RRC-Connected state to update the tracking area. The UE may then send the TAU Request message and receive a TAU Accept message from the MME. The ECM/RRC connection may subsequently be released, and the UE return to ECM-ldle/RRC-Idle state. When the UE is attached but in the idle state, if DL traffic is present, the MME may initiate paging to prompt the UE to establish an ECM/RRC connection. The paging is conducted based on the Tracking Area Identifier (TAI) information provided by the eNB and the TAI list assigned by the MME during the last tracking area update.

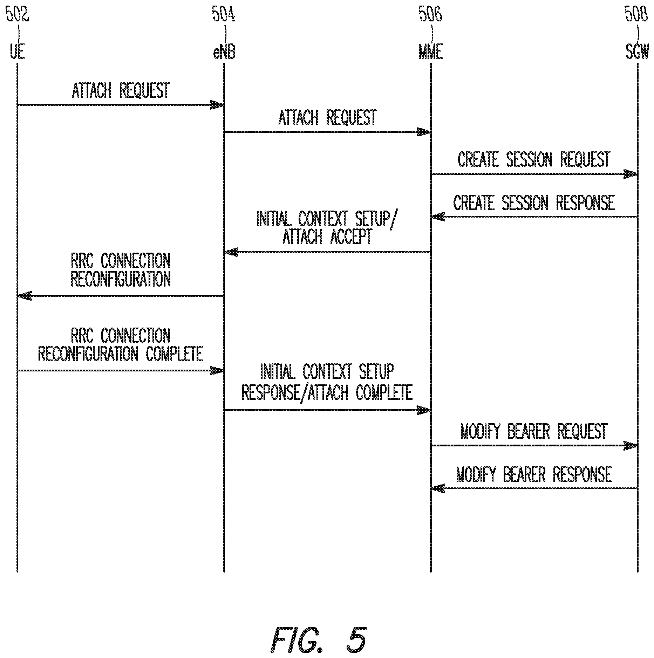

FIG. 5 is a flowchart of an Attach procedure The Attach procedure may be implemented by the components shown in FIGS. 1-4. FIG. 5 illustrates a simple case in which the Attach procedure does not involve an MME change, i.e., the UE re-attaches to the same MME from which it detached before. The Attach procedure may be used to attach a UE to an EPC for a packet service of the EPC. The Attach procedure can be used when a UE attaches to an EPS service and/or non-EPS service or for emergency bearer services.

The EMM-deregistered UE 502 initiates the Attach procedure by transmitting an Attach Request message to the eNB 504 and RRC parameters indicating the selected network and the Globally Unique Mobility Management Entity Identifier (GUMMEI) of the MME 606. The Attach Request message may include UE identity information, e.g., a Globally Unique Temporary Identifier (GUTI). The UE sets the voice domain preference and UE's usage setting according to its configuration. The last visited Tracking Area Indicator (TAI) may also be included to help the MME 506 produce a list of TAIs for subsequent Attach Accept messages. The Attach Request may have an Attach Type and Request Type that may be useful for Emergency Attach Requests.

The eNB 504 may determine the MME 506 from the RRC parameters and then forward the Attach Request message to the MME 506 contained in an S1-MME control message Initial UE Message along with other information such as the selected network, a Closed Subscriber Group (CSG) access mode, a CSG ID, and TAI+ECGI of the cell from where the Attach Request message was received.

The MME 506 may then transmit a Create Session Request to the SGW 508. This may be used by the SGW 508 to establish the EPS bearers with the PDN GW (not shown) for communication with the UE 502. The SGW 508 may respond with a Create Session Response to the MME 506 after the EPS bearers have been set up with the PDN GW .

When the Attach Request is granted in the corresponding network, the MME 506 may transmit an Attach Accept message to the eNB 504. Hits message is contained in an S1_MME control message Initial Context Setup Request, that may also include other information used by the UE in establishing attachment, such as security context information, EPS Bearer QoS and Identity, and address of the SGW 508. In addition, the MME may provide information for instructing the UE to perform EPS bearer context activation to the UE. The MME 506 may also respond to the Attach Request message with an Attach Reject message, along with the appropriate cause for the rejection to the UE 502.

Upon reception of the Attach Accept message from the MME 506 the eNB 504 sends a RRC Connection Reconfiguration message including the EPS Radio Bearer Identity to the UE 502 in addition to the Attach Accept message. In response, the UE 502 may transmit an RRC Connection Reconfiguration Complete message to the eNB 504. The eNB 504 then transmits an Initial Context Response message to the MME 506 containing, among others, the address of the eNB 504 used for downlink traffic on the S1_U reference point. The UE 502 may also transmit Attach Complete message to the MME 506 via the eNB 504. The Attach Complete message may be transmitted separately from the Initial Context Response message.

The MME 506, after receiving the Attach Complete message and the Initial Context Response message, may send a Modify Bearer Request message to the SGW 508. The SGW 508 may communicate with the PDN GW if handover from non-3GPP to 3GPP access is to occur at this point. The SGW 508 may respond to the Modify Bearer Request message by sending a Modify Bearer message to the MME 506. The SGW 508 can then send any buffered downlink packets for the UE 502.

A combined attach procedure is similar. The combined attach procedure is used for both EPS and non-EPS services, and by a UE in a circuit switched (CS)/packet switched (PS) mode of operation. In this mode, the UE prefers to use either EPS services ("voice centric") or non-EPS services ("data centric") and is configured to use CS fallback. The UE indicates its request to attach for both EPS and non-EPS services in an information element (IE), the EPS attach type IE, in the Attach request.

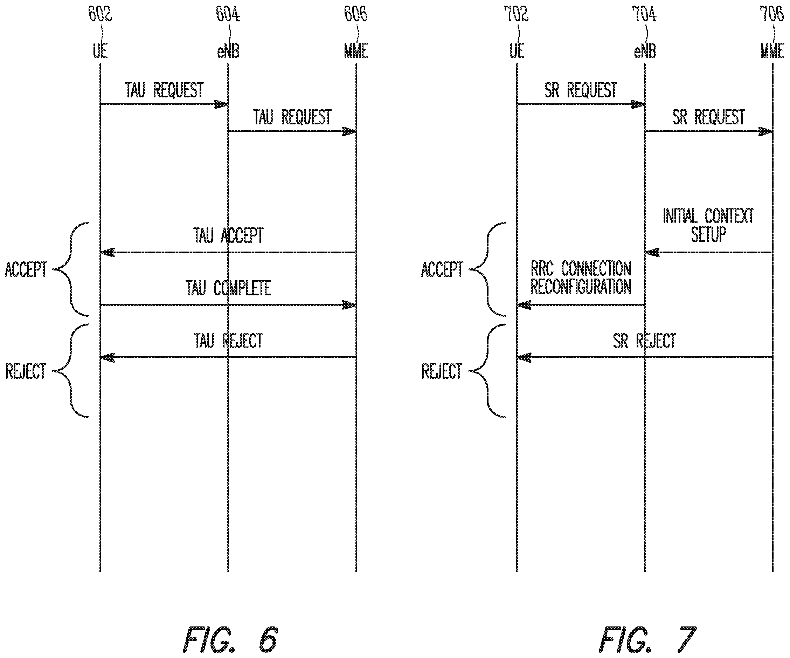

The UE may provide update information via a TAU Request message. FIG. 6 is a flowchart of a TAU procedure The TAU procedure may be implemented by the components shown in FIGS. 1-4. FIG. 6 illustrates a simple case in which the TAU procedure does not involve a MME or serving gateway change. The TAU procedure may be initiated by a UE and can be used to update registration of a tracking area of the UE or to periodically notify the network of availability of the UE.

The TAU procedure may be triggered by the UE 602 upon detecting that the UE 602 has entered a tracking area that is not included in a tracking area list of the UE 602 or when timers T3411, T3402, and T3346 have expired, as discussed in more detail below. The UE 602 may start the TAU procedure by transmitting a TAU request message to the eNB 604 together with RRC parameters indicating the LTE network and the GUMMEI of the MME 606. The parameters in the TAU request message include, among others, the last visited TAI to help the MME 606 produce a good list of TAIs for subsequent TAU Accept messaged, and an active flag that can act as a request to activate the radio and S1 bearers for all the active EPS bearers by the TAU procedure.

The eNB 604, having received the TAU request message, may derive the MME 606 from the RRC parameters. The eNB 604 may forward the TAU request message with the closed subscriber group (CSG) access mode, CSG ID, and TAI+ECGI of the cell from which the eNB 604 received the message and the selected network to the MME 606.

The MME 606 may then transmit a TAU accept message to the UE 602. The TAU accept message may contain a new GUTI. If the active flag is set in the TAU request message, the user plane setup procedure may be activated in conjunction with the TAU Accept message. The message sequence for the setup of the user plane may be the same as for the UE-triggered Service Request procedure.

The UE 602 may respond with a TAU complete message to the MME 606. In particular, if the GUTI of the UE 602 was changed, the UE 602 may acknowledge the new GUTI by returning a TAU complete message to the MME 606. When the active flag is not set in the TAU request message and the TAU was not initiated in the ECM-CONNECTED state, the MME 606 may release the signaling connection with UE 602.

The UE may also request services from the network, for example based on UE-initiated services being desired (i.e., the presence of UL signaling or data traffic) or based on a paging request being received. FIG. 7 is a flowchart of a Service Request (SR) procedure The service request procedure may be implemented by the components shown in FIGS. 1-4. The service request procedure can be used to switch a UE in the EMM-Idle state to an EMM-Connected state and to establish the radio and S1 bearers such that uplink user data or signaling can be transmitted. In addition, an extended service request procedure may be used to operate mobile originated (MO)/mobile terminated (MT) CS fallback (CSFB). For example, the service request procedure can be used for cases in which the network has downlink signaling to be transmitted, the UE has uplink signaling to be transmitted, or the UE or the network has user data to be transmitted while the UE is in the EMM-Idle state.

The UE 702 may initiate the service request procedure by transmitting a service request message or an extended service request message to the MME 506 through the eNB 504. Upon reception of the (extended) service request message, the MME 706 may perform authentication and security mode control. Upon reception of indication that user plane radio bearer has been set up or indication of inter-system change to GERAN or UTRAN from a lower layer, the UE 702 may process the indication as an indication that the service request procedure has been successfully completed; when the service request is accepted, a service request accept may be signaled implicitly rather than using a NAS message. The MME 706 may send an initial context setup message to the eNB 704 to indicate the bearers have been established. The eNB 704 may in turn send a RRC Connection Reconfiguration message to the UE 702 indicating the Attach has been completed. The UE may then enter the EMM-Registered/ECM-Connected/RRC-Connected state. When the service request message or extended service request message is not granted in the network, the MME may transmit a service reject message to the UE. The service reject message may include a value indicating the cause for rejection.

3GPP standard TS 24.301 and 24.008 covers the procedures described. As indicated, under certain conditions, the MME may reject the Attach or TAU request message. The MME may in this case respectively transmit an Attach or TAU reject message to the UE. The Attach or TAU reject message may include the cause of the rejection. The rejection may be caused by, for example, failure of the Attach or TAU request message due to access class barring or NAS signaling connection establishment rejection, lower layer failure or network failure. Network failure may be caused by component failure or congestion, for example.

Some of the failures indicated in the Attach or TAU reject message may cause an Attach or TAU attempt counter to be incremented by one or be set to a predetermined value, 5, and one of a number of different timers set, depending on the failure condition. The timers may control re-attempts to transmit the Attach or TAU request. For example, the LTE network may be unavailable due to congestion. In this case, the UE may start the back-off (T3346) timer. The T3346 timer is a backoff timer set as above when the NAS level MM congestion control is activated. The T3346 timer may have an extended period, such as several hours. While T3346 is running, the UE does not start the attach procedure unless the UE needs to attach for emergency bearer services. When the T3346 timer is running, the UE may not initiate the Attach procedure, the TAU procedure, and the Service Request procedure, until the T3346 timer expires.

If the T3346 timer has expired or is otherwise not running, the attempt counter is less than 5 and the Attach failure is caused by any of: a lower layer failure, timeout of the T3410 timer (initiated after the Attach request is sent) or rejection of the Attach request with other EMM cause values than those described in subclause 5.5.1.2.5 of 3GPP TS 24.301, the UE may start the T3411 timer. Similarly, if the T3346 timer is not running, the attempt counter is less than 5 and the TAU procedure failure is caused by any of: a lower layer failure, timeout of the T3430 timer (initiated after the TAU request is sent) or the rejection of the TAU request with other EMM cause values than those described in subclause 5.5.3.2.5 of 3GPP TS 24.301, the UE may start the T3411 timer. The EMM state may be set to the EMM-Deregistered.Attempting-to-Attach state (for an Attach Request) or EMM-Registered.Attempting-to-Update state (for a TAU Request). The setting of T3411 timer may be 10s. The attach attempt counter and TAU attempt counter may keep track of the number of failures. When the T3411 timer expires, the UE may resend the request.

If the TAU attempt fails, the TAU attempt counter is less than 5, and the TAI of the current serving cell is included in the TAI list received from the MME, the UE keeps the EPS update status at Updated and typically enters the EMM-Registered.Normal-Service state. For all other cases, the UE may start timer T3411, set the EPS update status to Not Updated and change the state to EMM-Registered.Attempting-to-Update state. If the timer T3411 is running after a failed periodic TAU attempt, the timer may be stopped when the UE enters the EMM-Connected state.

After 5 failures, after each of which the attempt counter is incremented, the UE may start the timer T3402 to delay further retry attempts. The default setting of T3402 timer may be 12 min, which may be changed by the LTE network sending a different value in an EMM signaling procedure. Depending on the request, the UE may be in the EMM-Registered or EMM-Deregistered state. Note that in GSM, the timers are similar, for example, the T3302 being the GPRS Mobility management timer for Attach failure and routing area update failure, and Routing Area update (RAU) corresponds to TAU.

Through the use of the T3411 timer and T3402 timer, frequent processing of the retry attempts of the Attach or TAU procedure may be avoided for the LTE network, so that the system resources of the LTE network may be available for other tasks. However, when timer T3411 or timer T3402 is running, the operation of a UE under certain conditions may not be defined and may result in actions such as dropped IMS calls or missing data occurring when such conditions are met, resulting in a detrimental user experience.

3GPP TS 24.301 (section 5.2.2.3.3) indicates that when the LTE is in the EMM-Deregistered. Attempting-to-Attach state, the UE uses requests for non-EPS services from the Connection management (CM) layers to trigger a combined attach procedure if T3346 is not running. The UE may select a GERAN or UTRAN cell, if available, to speed up the connection requests from the CM layers. The UE and network may then proceed with the appropriate mobility management and CS specific procedures. If the UE remains in E-UTRAN, the UE may stay in the Attempting-to-Attach state as long as the T3411/T3402 timer is running and starts the next attach attempt, i.e., enters state EMM-REGISTERED-INITIATED, when the T3411/T3402 timer expires. According to 3GPP TS 24.008 (section 4.2.4.2.2), a similar UE reaction may be provided for GPRS Mobility management (GMM) state GMM-Deregistered.Attempting-to-Attach.

When activity is initiated by the UE while the UE is in the idle mode (EMM-Deregistered state), the UE may first register with the network to enter the EMM-Registered state before initiating a service request or transmitting a TAU or RAU message. This may occur in response to non-user-initiated events, such as an e-mail client on the UE which is periodically checking for incoming e-mails, or in response to user-initiated events, such as initiation of an IMS Call. In the latter case, these user-initiated events may trigger or may occur when the UE is in the Attempting-to-Attach or Attempting-to-Update states, which may occur due to T3411, T3402, T3311, T3302 running. However, until and unless the timers expire, the service request (e.g., VoLTE call) cannot proceed. The call may thus be rejected. In some cases, this may result in an annoyance to the user as the process of fulfilling the service request may stall for a few seconds; in other cases, in which the T3402 timer is activated, the experience may lead to exasperation as the service request remains unfulfilled for an extended amount of time (e.g., 12 minutes).

Allowing the delay to occur for non-user initiated events, such as attaching for an e-mail client which is periodically checking for incoming e-mails, may not substantially affect the user experience and thus may be of little issue to this extent. It may be desirable to eliminate or minimize the delay for a user-initiated event when the timers are in operation. One or more triggers may be added for the following services. A trigger may be added for an Attach Request when the UE is in the Attempting-to-Attach state in a UMTS or LTE cell, for a TAU Request when the UE is in Attempting-to-Update state in an LTE cell, and/or for a RAU Request when the UE is in Attempting-to-Update state in a UMTS cell. This modification (the triggers) may be indicated in higher layer signaling when the UE initially attaches to the network. The triggers may include one or more of a multimedia telephony service (MMTel) voice call from the UE, a MMTel Video call from the UE, and/or an originating SMS or SMS over IMS from the UE.

This may involve modification of Section 5.2.2.3.3 of 3GPP TS 24.301. This modification may be:
- 5.2.2.3.3 ATTEMPTING-TO-ATTACH
The UE:
- shall use requests from the upper layer for an MMTel voice call [, MMTel video call, originating SMS or originating SMS over IMS] to trigger a combined/normal attach procedure (based on the UE mode of operation), if timer T3346 is not running (see subclause 5.5.1.3).

The upper layer refers to the layers on top of the LTE Protocol Stack, such as an application layer including a telephony application or short message service (SMS) application. This may also involve modification of Section 4.2.4.2.2 of 3GPP TS 24.008. This modification may be:
- 4.2.4.2.2 Substate, ATTEMPTING-TO-ATTACH
The MS:
- may use a request for an MMTel voice call or MMTel video call from the upper layer to initiate GPRS attach, if in Iu mode and timer T3346 is not running;

Similar modifications may be included in Section 5.2.3.2.2 of 3GPP TS 24.301 as well:
- 5.2.3.2.2 ATTEMPTING-TO-UPDATE
The UE:
- shall use requests from the upper layer for an MMTel voice call [, MMTel video call, originating SMS or originating SMS over IMS] to trigger a combined/normal tracking area update procedure (based on the UE mode of operation), if timer T3346 is not running (see subclause 5.5.1.3).

As well as Section 4.2.5.1.4 of 3GPP TS 24.008:
- 4.2.5.1.4 Substate, ATTEMPTING-TO-UPDATE
The MS:
- may use a request for an MMTel voice call or MMTel video call from the upper layer to initiate routing area updating procedure, if in Iu mode and timer T3346 is not running;

The UE may operate in the Iu mode when the UE is in a UTRAN cell and in the A/Gb mode when the UE is in a GERAN cell. In addition, the UE may operate in an S1 mode when the UE is in a E-UTRAN cell.

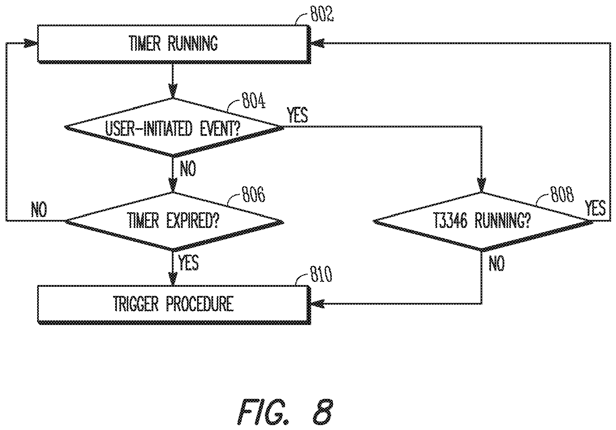

FIG. 8 illustrates a flow diagram of a modified network procedure The method may be performed by any of the UEs indicated in FIGS. 1-4. At operation 802, a timer may be running in the UE. The timer may be T3411, T3402, T3311, T3302 or T3346. The UE may be in the EMM-Registered or EMM-Deregistered state.

At operation 804, an event may occur that would normally trigger in any of the states associated with an attempt, e.g., the EMM-Attempting-to-Attach, EMM-Attempting-to-Update, GMM-Attempting-to-Attach, or GMM-Attempting-to-Update states. The UE may determine whether the event is user-initiated or non-user initiated (such as a request from an e-mail client which is periodically checking for incoming e-mails or expiry of one of the timers T3411, T3402, T3311, T3302 and T3346).

In response to a determination that the event is non-user initiated, the UE may determine at operation 806 whether the event is caused by the expiry of a timer. The timer may be specified to be one of the timers T3411, T3402, T3311, T3302 and T3346.

In response to a determination that the event is user initiated, the UE may determine at operation 808 whether the timer of operation 802 is a specific type of timer. In particular, the UE may determine whether the timer is the T3346 timer. If the UE determines that the T3346 timer is running, the UE may return to operation 802. The T3346 timer may be modified. If the UE determines that one of the timers T3411, T3402, T3311 and T3302 is running, the timer may be terminated or immediately set to 0 and the UE may proceed to operation 810. The timer T3411, T3402, T3311 or T3302 respectively may be modified and the UE may return to operation 802.

If the timer T3411, T3402, T3311, T3302 or T3346 has expired, as determined at operation 806 or if the timer of operation 802 is not T3346 as determined at operation 808, at operation 810, the UE may immediately trigger the appropriate procedure. If the timer T3411, T3402, T3311, T3302 or T3346 has expired prior to the user-initiated event occurring, the UE may immediately trigger the appropriate procedure regardless whether the event of operation 804 was user-initiated or non-user-initiated.

The various examples above may add a trigger for the Attach or TAU procedure in the EMM and GMM states: EMM-Attempting-to-Attach, EMM-Attempting-to-Update, GMM-Attempting-to-Attach, GMM-Attempting-to-Update. This may occur when there is a pending IMS voice, IMS video, originating SMS and/or originating SMS over IMS. Thus, if the UE is any of the states above and there is a trigger from the UE for a service such as MMTel Voice, MMTel Video or originating SMS and/or originating SMS over IMS, then the UE may immediately trigger an Attach, TAU or RAU procedure as per the current EMM state without any delay. Once the procedure is successful, the UE may initiate the signaling for the desired service.

In other examples , rather than terminating the timers immediately, the various sections of the 3GPP TSs may be modified such that the UE may trigger an Attach, TAU or RAU procedure after a modified delay rather than immediately. This time period may reset the timer to a lower value, for example, to ½ the present value or to a predetermined amount that is dependent on the timer, or a combination thereof. For example, the particular timer may be set to a particular percentage of the immediate value and have a maximum value that may be greater or lesser than the percentage of the immediate value when the user-initiated event occurs. Similarly, the timer values may vary depending on the type of event. For example, the voice and video-based events may have reduced timing (e.g., immediate trigger) compared with the SMS-based events (delayed trigger). In addition, in the event a delay exists, the UE may display the time and an indication of the reason for the delay to the user on the device screen. Thus, the timer modification may be based on various aspects of the UE as well as specific event, such as the type of UE, the UE/user priority and/or call or SMS destination.

In the EMM states, the T3411 or T311 timer may run for 15 seconds, and the T3302 or T3402 timer may run for 12 minutes. Without the above modifications, a pending outgoing IMS call may get delayed for the duration of the T3411, T3311, T3302 or T3402 timer. Note that above, immediate (or partially delayed) triggering when the T3346 timer is running may be excluded due to the nature of the event that has caused the T3346 timer (network congestion or failure/outage). However, the T3346 timer may also be reduced in some or all of the manners above to permit the user-initiated event to occur more quickly than normal.

As per 3GPP TS 24.301, annex D.1, the EMM may already be aware of whether a particular request from upper layers is for an MMTel Voice or MMTel Video call as the EMM layer in the UE may set the "call type" parameter for the Access Stratum accordingly.

Although an embodiment has been described with reference to specific example embodiments, it will be evident that various modifications and changes may be made to these embodiments without departing from the broader scope of the claims. . Accordingly, the specification and drawings are to be regarded in an illustrative rather than a restrictive sense. The accompanying drawings that form a part hereof show, by way of illustration, and not of limitation, specific embodiments in which the subject matter may be practiced. The embodiments illustrated are described in sufficient detail to enable those skilled in the art to practice the teachings disclosed herein. Other embodiments may be utilized and derived therefrom, such that structural and logical substitutions and changes may be made without departing from the scope of the claims. . This Detailed Description, therefore, is not to be taken in a limiting sense, and the scope of various embodiments is defined only by the appended claims.

The subject matter may be referred to herein, individually and/or collectively, by the term "embodiment" merely for convenience and without intending to voluntarily limit the scope of this application to any single inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, UE, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

In addition, in the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separate embodiment.

## Claims

1. An apparatus comprising:
at least one processor (402) in communication with a memory (404) and arranged to:
receive, from an upper layer, a request for a multimedia telephony service, MMTEL, voice call or MMTEL video call;
determine, in a REGISTERED ATTEMPTING-TO-UPDATE mobility state whether a General Packet Radio Service, GPRS, T3346 timer is running; and
in response to reception of the request for the MMTEL voice or video call from the upper layer, initiate one of a routing areas update, RAU, or tracking areas update, TAU, when the GPRS T3346 timer is not running and at least one of T3411, T3402, T3311, and T3302 are running.

2. The apparatus of claim 1, wherein:
the RAU is initiated in Iu mode only when RAU is initiated.

3. A non-transitory computer-readable storage medium (422) comprising instructions which, when executed by a processor of a user equipment, UE, cause the UE to:
receive, from an upper layer, a request for a multimedia telephony service, MMTEL, voice call or MMTEL video call from an upper layer;
determine, in a REGISTERED ATTEMPTING-TO-UPDATE mobility state whether a General Packet Radio Service, GPRS, T3346 timer is running; and
in response to reception of the request for the MMTEL voice or video call from the upper layer, initiate one of a routing areas update, RAU, or tracking areas update, TAU, when the GPRS T3346 timer is not running and at least one of T3411, T3402, T3311, and T3302 are running.

4. The medium of claim 3, wherein:
the RAU is initiated in lu mode only when RAU is initiated.

5. A method performed by a user equipment, UE, (502) communicating with a base station (504), the method comprising:
receiving, from an upper layer, a request for a multimedia telephony service, MMTEL, voice call or MMTEL video call from an upper layer;
determining, in a REGISTERED ATTEMPTING-TO-UPDATE mobility state whether a General Packet Radio Service, GPRS, T3346 timer is running; and
in response to reception of the request for the MMTEL voice or video call from the upper layer, initiating one of a routing areas update, RAU, or tracking areas update, TAU, when the GPRS T3346 timer is not running and at least one of T3411, T3402, T3311, and T3302 are running.

6. The method of claim 5, wherein:
the RAU is initiated in lu mode only when RAU is initiated.

## Patentansprüche

1. Vorrichtung umfassend:
mindestens einen Prozessor (402) in Kommunikation mit einem Speicher (404) und eingerichtet zum:
Empfangen, von einer oberen Schicht, einer Anfrage für einen Multimedia-Telefondienst, MMTEL, -Sprachanruf oder MMTEL-Videoanruf;
Bestimmen, in einem REGISTERED ATTEMPTING-TO-UPDATE Mobilitätszustand, ob ein General Packet Radio Service, GPRS, T3346-Timer läuft; und
als Reaktion auf Empfang der Anfrage für den MMTEL-Sprach- oder - Videoanruf von der oberen Schicht, Initiieren einer Routing-Bereichs-Aktualisierung, RAU, oder einer Tracking-Bereichs-Aktualisierung, TAU, wenn der GPRS-T3346-Timer nicht läuft und mindestens einer von T3411, T3402, T3311, und T3302 läuft.

2. Vorrichtung nach Anspruch 1, wobei:
die RAU nur im Iu-Modus initiiert wird, wenn RAU initiiert wird.

3. Nichtflüchtiges computerlesbares Speichermedium (422), umfassend Anweisungen, die, wenn sie von einem Prozessor eines Benutzergeräts, UE, ausgeführt werden, das UE veranlassen zum:
Empfangen, von einer oberen Schicht, einer Anfrage für einen Multimedia-Telefondienst, MMTEL, -Sprachanruf oder MMTEL-Videoanruf von einer oberen Schicht;
Bestimmen, in einem REGISTERED ATTEMPTING-TO-UPDATE Mobilitätszustand, ob ein General Packet Radio Service, GPRS, T3346-Timer läuft; und
als Reaktion auf Empfang der Anfrage für den MMTEL-Sprach- oder - Videoanruf von der oberen Schicht, Initiieren einer Routing-Bereichs-Aktualisierung, RAU, oder einer Tracking-Bereichs-Aktualisierung, TAU, wenn der GPRS-T3346-Timer nicht läuft und mindestens einer von T3411, T3402, T3311, und T3302 läuft.

4. Medium nach Anspruch 3, wobei:
die RAU nur im Iu-Modus initiiert wird, wenn RAU initiiert wird.

5. Verfahren, das von einem Benutzergerät, UE, (502) durchgeführt wird, das mit einer Basisstation (504) kommuniziert, wobei das Verfahren umfasst:
Empfangen, von einer oberen Schicht, einer Anfrage für einen Multimedia-Telefondienst, MMTEL, -Sprachanruf oder MMTEL-Videoanruf von einer oberen Schicht;
Bestimmen, in einem REGISTERED ATTEMPTING-TO-UPDATE Mobilitätszustand, ob ein General Packet Radio Service, GPRS, T3346-Timer läuft; und
als Reaktion auf Empfang der Anfrage für den MMTEL-Sprach- oder - Videoanruf von der oberen Schicht, Initiieren einer Routing-Bereichs-Aktualisierung, RAU, oder einer Tracking-Bereichs-Aktualisierung, TAU, wenn der GPRS-T3346-Timer nicht läuft und mindestens einer von T3411, T3402, T3311, und T3302 läuft.

6. Verfahren nach Anspruch 5, wobei:
die RAU nur im Iu-Modus initiiert wird, wenn RAU initiiert wird.

## Revendications

1. Un appareil comprenant :
au moins un processeur (402) en communication avec une mémoire (404) et agencé pour :
recevoir, en provenance d'une couche supérieure, une requête pour un appel vocal de service de téléphonie multimedia, MMTEL, ou un appel vidéo MMTEL ;
déterminer, dans un état de mobilité REGISTERED ATTEMPTING-TO-UPDATE, si un temporisateur T3346 de Service radio généralisé par paquets, GPRS, s'exécute ou non ; et
en réponse à la réception de la requête pour l'appel vocal ou vidéo MMTEL en provenance de la couche supérieure, déclencher l'une d'entre une mise à jour de zones de routage, RAU, ou une mise à jour de zones de suivi, TAU, lorsque le temporisateur T3346 GPRS ne s'exécute pas et qu'au moins l'un d'entre T3411, T3402, T3311 et T3302 s'exécute.

2. L'appareil de la revendication 1, dans lequel :
la RAU est déclenchée en mode Iu seul, lorsque la RAU est déclenchée.

3. Un support de stockage non transitoire lisible par calculateur (422) comprenant des instructions qui, lorsqu'elles sont exécutées par un processeur d'un équipement utilisateur, UE, font en sorte que l'UE :
reçoive, en provenance d'une couche supérieure, une requête pour un appel vocal de service de téléphonie multimedia, MMTEL, ou un appel vidéo MMTEL ;
détermine, dans un état de mobilité REGISTERED ATTEMPTING-TO-UPDATE, si un temporisateur T3346 de Service radio généralisé par paquets, GPRS, s'exécute ou non ; et
en réponse à la réception de la requête pour l'appel vocal ou vidéo MMTEL en provenance de la couche supérieure, déclenche l'une d'entre une mise à jour de zones de routage, RAU, ou une mise à jour de zones de suivi, TAU, lorsque le temporisateur T3346 GPRS ne s'exécute pas et qu'au moins l'un d'entre T3411, T3402, T3311 et T3302 s'exécute.

4. Le support de la revendication 3, dans lequel :
la RAU est déclenchée en mode Iu seul, lorsque la RAU est déclenchée.

5. Un procédé mis en œuvre par un équipement utilisateur, UE, (502) communiquant avec une station de base (504), le procédé comprenant :
la réception, en provenance d'une couche supérieure, d'une requête pour un appel vocal de service de téléphonie multimedia, MMTEL, ou d'un appel vidéo MMTEL en provenance d'une couche supérieure ;
la détermination, dans un état de mobilité REGISTERED ATTEMPTING-TO-UPDATE, si un temporisateur T3346 de Service radio généralisé par paquets, GPRS, s'exécute ou non ; et
en réponse à la réception de la requête pour l'appel vocal ou vidéo MMTEL en provenance de la couche supérieure, le déclenchement de l'une d'entre une mise à jour de zones de routage, RAU, ou une mise à jour de zones de suivi, TAU, lorsque le temporisateur T3346 GPRS ne s'exécute pas et qu'au moins l'un d'entre T3411, T3402, T3311 et T3302 s'exécute.

6. Le procédé de la revendication 5, dans lequel :
la RAU est déclenchée en mode Iu seul, lorsque la RAU est déclenchée.
